# EUROPÄISCHE PATENTANMELDUNG

(11) **EP 1 637 841 A2**
(43) Veröffentlichungstag der Anmeldung: **22.03.2006**
(21) Anmeldenummer: 05107676.8
(22) Anmeldetag: 22.08.2005
(51) Int. Cl.: G01C 21/34

(54) **Navigationssystem und Verfahren zur Bestimmung einer Fahrtroute**

(30) Priorität: 16.09.2004 DE 102004044968
(71) Anmelder: SIEMENS AKTIENGESELLSCHAFT, 80333 München (DE)
(72) Erfinder: Gruß, Heiko, 35260, Stadtallendorf (DE)

(57) **Zusammenfassung**

Es wird ein Verfahren zur Bestimmung einer Fahrtroute für ein Landfahrzeug zwischen einem Startort und einem Zielort mit folgenden Verfahrensschritten vorgeschlagen:
- Berechnen einer ersten Route zwischen dem Startort (SO und dem Zielort (ZO) anhand von Landkartendaten,
- Bestimmen eines ersten imaginären Startortes (SO1), der ein Ort auf der berechneten ersten Route zwischen dem Startort (SO) und dem Zielort (ZO) ist,
- Berechnen einer Route zwischen dem imaginären Startort (SO1) und dem Zielort (ZO),
- Vergleichen der berechneten Route zwischen dem imaginären Startort (SO1) und dem Zielort (ZO) mit einer entsprechenden Teilroute (TR) der ersten Routen hinsichtlich mindestens einer Routenkennzahl, insbesondere der Routenlänge oder der Fahrzeit,
- gegebenenfalls Ersetzen der entsprechenden Teilroute der ersten Route durch die berechnete Route zwischen dem imaginären Startort (SO1) und dem Zielort (ZO).

## Beschreibung

Die Erfindung betrifft ein Verfahren zur Bestimmung einer Fahrtroute für ein Landfahrzeug zwischen einem Startort und einem Zielort sowie ein Navigationssystem für Landfahrzeuge mit einem Positionsbestimmungsmodul zur Bestimmung der aktuellen Fahrzeugposition, einer Eingabeeinrichtung zur Eingabe eines Zielortes, einem Routenplaner zur Bestimmung einer Fahrtroute anhand von Landkartendaten, einem Modul zur Generierung von Fahrhinweisen unter Verwendung der Fahrtroute und einer Ausgabeeinrichtung zur Ausgabe der Fahrhinweise.

Derartige Navigationssysteme und Verfahren zur Bestimmung einer Fahrtroute sind bekannt und werden kommerziell eingesetzt. Entsprechende Navigationssysteme werden beispielsweise von einem Tochterunternehmen der Patentanmelderin unter der Bezeichnung VDO Dayton MS 5400 und MS 4200 RS sowie anderen vertrieben. Bei diesen Navigationssystemen gibt der Benutzer den gewünschten Zielort über eine Eingabeeinrichtung ein oder wählt den Zielort aus einer Liste aus. Der Startort wird von den Systemen in der Regel automatisch bestimmt und zwar anhand von Signalen eines Satellitenortungssystems. Anhand von digitalen Landkartendaten erfolgt die Berechnung einer Route zwischen dem Startort und dem Zielort nach bekannten Rechenalgorithmen. Von dem Benutzer kann zudem gewählt werden, ob eine schnellste oder eine kürzeste Route berechnet werden soll, das heißt, es findet bereits eine gewisse Optimierung hinsichtlich der Entfernung bzw. der Reisezeit statt. Anhand der berechneten Route werden Fahrhinweise an den Fahrer ausgegeben. Verlässt der Fahrer die berechnete Route, so wird eine Neuberechnung der Route gestartet.

Aus der EP 0 838 797 A1 ist ein Navigationssystem für ein Landfahrzeug bekannt, das auch zum Empfang von Verkehrsinformationen ausgelegt ist. Bei diesem Navigationssystem wird zunächst eine erste statische Route ohne Berücksichtigung der Verkehrsinformationen berechnet. Die Verkehrsinformationen werden kontinuierlich ausgewertet und es wird mit Berücksichtigung der Verkehrsinformation eine zweite dynamische Route berechnet.

Die Berechnung einer optimalen Route zwischen dem Startort und dem Zielort erfordert einen sehr komplexen Algorithmus, so dass bei den Routenplanern in Kraftfahrzeugnavigationssystemen ein Kompromiss hinsichtlich der Berechnung einer optimalen Route und der Dauer zur Berechnung einer Route, abhängig von den vorhandenen Ressourcen erforderlich ist.

Aufgabe der Erfindung ist es daher, ein Verfahren anzugeben, mit dem dem Benutzer möglichst schnell eine Route zwischen dem Startort und dem Zielort zur Verfügung gestellt wird, andererseits jedoch eine weitere Routenoptimierung erfolgt.

Die Aufgabe wird erfindungsgemäß durch ein Verfahren zur Bestimmung einer Fahrtroute für ein Landfahrzeug zwischen einem Startort und einen Zielort mit folgenden Verfahrensschritten gelöst:
- Berechnen einer ersten Route zwischen dem Startort und dem Zielort anhand von Landkartendaten,
- Stimmen eines ersten imaginären Startortes, der ein Ort auf der berechneten ersten Route zwischen dem Startort und dem Zielort ist,
- Berechnen einer Route zwischen dem imaginären Startort und dem Zielort,
- Vergleichen der berechneten Route zwischen dem imaginären Startort und dem Zielort mit einer entsprechenden Teilroute der ersten Route hinsichtlich mindestens einer Routenkennzahl, insbesondere der Routenlänge oder der Fahrzeit,
- gegebenenfalls Ersetzen der entsprechenden Teilroute der ersten Route durch die errechnete Route zwischen dem imaginären Startort und dem Zielort.

Mit dem erfindungsgemäßen Verfahren wird somit zunächst eine erste Route zwischen dem Startort und dem Zielort anhand von Landkartendaten in gewohnter Weise mit den gegebenen Kriterien berechnet. Es kommen somit also die bekannten Algorithmen zur Routenberechnung zum Einsatz. Bei den bekannten Systemen findet jedoch keine weitere Routenoptimierung statt und eine Routenneuberechnung erfolgt nur in Ausnahmefällen, beispielsweise wenn der Fahrer die geplante Route verlässt oder entsprechende Verkehrsinformationen zu der geplanten Route eingehen. Mit dem erfindungsgemäßen Verfahren erfolgt jedoch eine weitere Routenoptimierung nach der vollständigen ersten Berechnung einer Route. Für diese Routenoptimierung wird zunächst ein erster imaginärer Startort bestimmt. Dies ist ein Ort auf der berechneten Route, der zwischen dem Startort und dem Zielort liegt. Anschließend wird eine Route zwischen diesem imaginären Startort und dem Zielort berechnet. Es findet also hier eine weitere Routenberechnung statt, wobei der Startort für die Routenberechnung gegenüber dem ursprünglichen Startort aber in Richtung Zielort verschoben ist. Hierbei können nun insbesondere mehrere Routenberechnungen von dem imaginären Startort aus durchgeführt werden, wobei verschiedene Kriterien wie schnellste Route oder kürzeste Route zugrunde gelegt werden. Die Route bzw. die Routen zwischen dem imaginären Startort und dem Zielort werden anschließend mit der entsprechenden Teilroute der ersten Route, die zwischen dem Startort und dem Zielort berechnet wurde, hinsichtlich mindestens einer Routenkennzahl verglichen. Bei der Routenkennzahl handelt es sich insbesondere um die Routenlänge und/oder die Fahrzeit. Zur Bestimmung der Routenlänge und Fahrzeit auf der Teilroute der ersten Route wird dabei die Fahrzeit bzw. Weglänge zwischen dem Startort und dem imaginären Startort von der Fahrzeit bzw. Weglänge zwischen dem Startort und dem Zielort subtrahiert. Liefert die Berechnung der Route zwischen dem imaginären Startort und dem Zielort eine Route, bei der sich beispielsweise die Entfernung und die berechnete Reisezeit im Vergleich zur der Teilroute der ersten Route verkürzen, so ist eine bessere Route gefunden worden und die entsprechende Teilroute der ersten Route wird durch die berechnete Route zwischen dem imaginären Startort und dem Zielort ersetzt. Es kann nun mindestens ein weiterer imaginärer Startort bestimmt werden, der ein Ort zwischen dem ersten imaginären Startort und dem Zielort ist, und eine Route zwischen dem weiteren imaginären Startort und dem Zielort berechnet und mit der entsprechenden Teilroute einer zuvor berechneten Route verglichen werden. Mit anderen Worten wird bei dieser weiteren Berechnung der Startort erneut in Richtung des Zielortes verschoben und eine Routenberechnung zwischen diesem weiteren imaginären Startort und dem Zielort durchgeführt und das Ergebnis in der zuvor bereits beschriebenen Weise mit der entsprechenden Teilroute verglichen.

Hierzu können ausgehend vom Startort in etwa gleichen Abständen Orte auf der ersten Route als imaginäre Startorte ausgewählt werden. Die gesamte ursprüngliche Route zwischen dem Startort und dem Zielort wird somit in mehrere etwa gleiche Intervalle eingeteilt, wobei die Grenzpunkte zwischen zwei Intervallen als imaginäre Startorte für die Routenberechnung herangezogen werden. Als imaginäre Startorte können dabei Straßenverzweigungen gewählt werden. Dies hat den Vorteil, dass eine Routenberechnung nur von solchen Startorten aus gestartet wird, an denen ein Verlassen der ursprünglich geplanten Route überhaupt möglich ist.

Die Berechnung der Route zwischen mindestens einem der imaginären Startorte und dem Zielort kann mehrfach erfolgen, wobei verschiedene Berechnungsalgorithmen, insbesondere zur Berechnung einer kürzesten und einer schnellsten Route, zum Einsatz kommen.

Durch die Durchführung weiterer Routenberechnung mit verschobenen Startorten kann die ursprünglich berechnete erste Route zwischen dem Startort und dem Zielort weiter optimiert werden. Dabei kann die optimierte Route sich aus Teilrouten zusammensetzen, die nach verschiedenen Berechnungsalgorithmen, insbesondere zur Berechnung einer kürzesten oder einer schnellsten Route, berechnet wurden.

Ein erfindungsgemäßes Navigationssystem für Landfahrzeuge mit einem Positionsbestimmungsmodul zur Bestimmung der aktuellen Fahrzeugposition, einer Eingabeeinrichtung zur Eingabe eines Zielortes, einem Routenplaner zur Bestimmung einer Fahrtroute anhand von Landkartendaten, einem Modul zur Generierung von Fahrhinweisen unter Verwendung der Fahrtroute und einer Ausgabeeinrichtung zur Ausgabe der Fahrhinweise weist einen Routenplaner auf, der zur Bestimmung einer Fahrtroute nach dem erfindungsgemäßen Verfahren ausgelegt ist.

Dabei kann bereits unmittelbar nach der Berechnung der ersten Route die Generierung und Ausgabe von Fahrhinweisen erfolgen. Die Zeit vom Starten der Routenberechnung bis zur Ausgabe des ersten Fahrhinweises wird somit gegenüber bekannten Navigationssystemen nicht verlängert, da die weitere Routenberechnung zur Optimierung der Route erst nach der Ausgabe des ersten Fahrhinweises mit einem verschobenen Startort durchgeführt wird. Die von dem Fahrzeug zunächst zurückzulegende Strecke zwischen dem ursprünglichen Startort und dem verschobenen Startort bleibt somit unverändert, so dass Widersprüche in der Routenführung vermieden werden.

Die Berechnung der Routen mit unterschiedlichen imaginären Startorten kann zeitversetzt in festgelegten Zeitabständen erfolgen. Somit wird nicht bereits unmittelbar nach Ausgabe der ersten Zielführungsinformation die Routenoptimierung durchgeführt, sondern erst zu einem späteren Zeitpunkt, beispielsweise kurz bevor sich der Fahrer nach der berechneten Fahrzeit dem imaginären Startort nähert. Dies hat den Vorteil, dass nicht unnötig viele Routenberechnungen durchgeführt werden müssen, da nämlich für den Fall, dass der Fahrer die geplante Route verlässt, ohnehin eine völlige Neuberechnung der Route durchgeführt werden muss.

Alternativ zur Berechnung der weiteren Routen in festgelegten Zeitabständen kann die Berechnung einer der Routen mit imaginären Startorten auch dann erfolgen, wenn das Fahrzeug einen vorgegebenen Mindestabstand von diesem imaginären Startort unterschritten hat. Hierbei wird der gleiche Vorteil wie zuvor erreicht. Zusätzlich besteht jedoch nicht die Gefahr, die Optimierung der Route zu spät zu starten. Insbesondere kann der Mindestabstand kleiner sein als der Abstand zwischen zwei imaginären Startorten. Hierbei wird die Routenplanung dann gestartet, wenn das Fahrzeug in ein Streckenintervall zwischen zwei imaginären Startorten einfährt, an dessen Ende der imaginäre Startort liegt, von dem aus eine weitere Routenoptimierung durchgeführt werden soll.

Weiterhin kann das Navigationssystem derart ausgestaltet sein, dass ein Modus zur Bestimmung einer optimalen Route auswählbar ist, wobei in dem Modus zur Bestimmung der optimalen Route die Berechnung der ersten Route zwischen dem Startort und dem Zielort und die Berechnung der weiteren Routen zwischen den imaginären Startorten und dem Zielort abgeschlossen ist und eine optimale Route unter Verwendung von Teilrouten der ersten Route und mindestens eine der weiteren berechneten Routen zwischen einem der imaginären Startorte und dem Zielort bestimmt wird, bevor Fahrhinweise generiert und ausgegeben werden. Bei dieser Variante wird dem Benutzer des Navigationssystems neben den üblichen Wahlmöglichkeiten, nämlich der Berechnung einer kürzesten oder schnellsten Route, die Wahlmöglichkeit der Berechnung einer optimalen Route gegeben. Im Gegensatz zu dem vorher beschriebenen Verfahren werden hierbei zunächst alle Routenoptimierungsschritte mit imaginären Startorten vollständig durchgeführt, bevor der erste Fahrhinweis generiert und ausgegeben wird. Der Fahrer erhält hierbei von Beginn an die optimale Route, muss jedoch eine etwas längere Routenberechnungszeit in Kauf nehmen.

Weiterhin kann das Navigationssystem ein Modul zum Empfang und zur Verarbeitung von Verkehrsinformation enthalten und zur Berechnung einer alternativen Route im Fall von Verkehrsbehinderung auf der geplanten Route ausgelegt sein. Werden somit Verkehrsinformationen zu Verkehrsbehinderungen auf der geplanten Route empfangen, so wird eine Alternativroute zur Umgehung dieser Verkehrsbehinderungen geplant. Diese Alternativroute kann dem Fahrer zur Auswahl angeboten werden oder auch direkt die ursprüngliche Route ersetzen. Insbesondere kann auch die Berechnung der Alternativroute in der Weise durchgeführt werden, dass eine optimale Route, wie zuvor für die ursprüngliche Route beschrieben, bestimmt wird.

Die Erfindung wird nachfolgend anhand von Ausführungsbeispielen und der Zeichnung näher beschrieben. Es zeigen:
- Figur 1:: ein Blockschaltbild eines Kraftfahrzeugnavigationssystems,
- Figur 2:: ein Ablaufdiagramm eines erfindungsgemäßen Verfahrens und eine schematische Routendarstellung,
- Figur 3:: eine Kartendarstellung mit einer ersten Route,
- Figur 4:: eine Kartendarstellung mit einer zweiten Route.

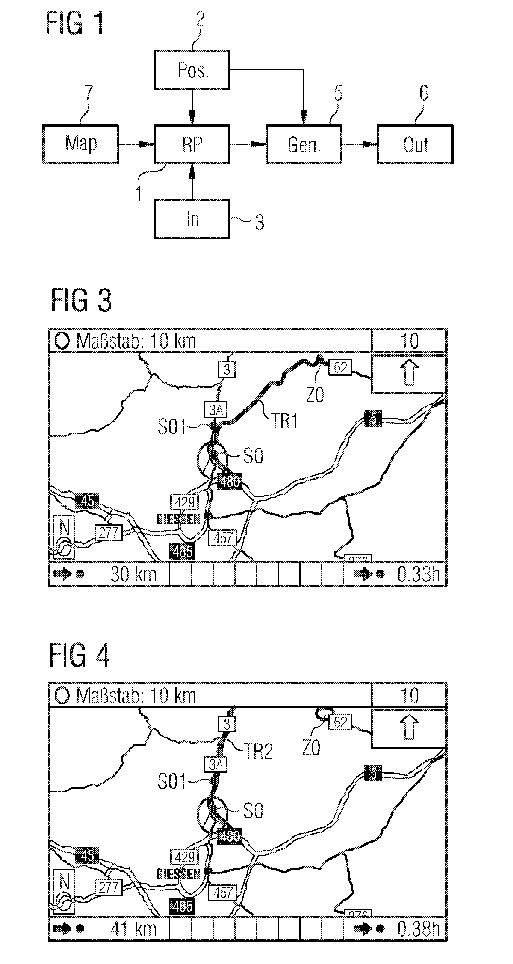

Figur 1 zeigt die wesentlichen Komponenten eines erfindungsgemäßen Kraftfahrzeugnavigationssystems als Blockschaltbild. Ein Routenplaner 1 erhält von einem Positionsbestimmungsmodul 2 Informationen über die aktuelle Position des Kraftfahrzeugs. Zu Beginn einer Fahrt wird die so bestimmte aktuelle Position des Kraftfahrzeugs als Startort für den Routenplaner verwendet. Über eine Eingabeeinrichtung 3 gibt der Fahrer den gewünschten Zielort ein. Anhand von abgespeicherten Landkartendaten, die auf einem Speicherelement 4 abgespeichert sind, berechnet der Routenplaner 1 eine Fahrtroute zwischen dem Startort und dem Zielort. Das Ergebnis der Berechnung wird an ein Modul 5 zur Generierung von Fahrhinweisen weitergegeben. Das Modul 5 gibt anhand der Daten der geplanten Route und von Positionsdaten, die von dem Positionsbestimmungsmodul 2 laufend geliefert werden, Fahrhinweise an eine Ausgabeeinrichtung 6.

Der Routenplaner 1 und das Modul 5 zur Generierung von Fahrhinweisen werden im Wesentlichen durch Software realisiert, die auf einen entsprechenden Prozessor abläuft. Bei der Eingabeeinrichtung 3 kann es sich in bekannter Weise um eine Tastatur oder einen Drehdrücksteller oder auch ein Lesegerät für ein wieder beschreibbares Speichermedium, auf dem die Zielorte abgespeichert sind, handeln. Die Landkartendaten sind auf einem Speicherelement 4 abgespeichert, das vorzugsweise als CD-ROM oder DVD oder alternativ auch als Festplatte, Flash Memory oder Speicherkarte (CF- oder SD-Card) ausgebildet ist. Das Positionsbestimmungsmodul 2 ist zum Empfang und zur Verarbeitung von Satellitennavigationssignalen ausgelegt. Weiterhin kann mittels entsprechender Sensoren im Fahrzeug eine Koppelnavigation durchgeführt werden. Auch ein Abgleich der so bestimmten Position mit den Landkartendaten kann von dem Positionsbestimmungsmodul vorgenommen werden. Bei der Ausgabeeinrichtung 6 kann es sich sowohl um eine akustische als auch um eine optische Ausgabeeinrichtung handeln.

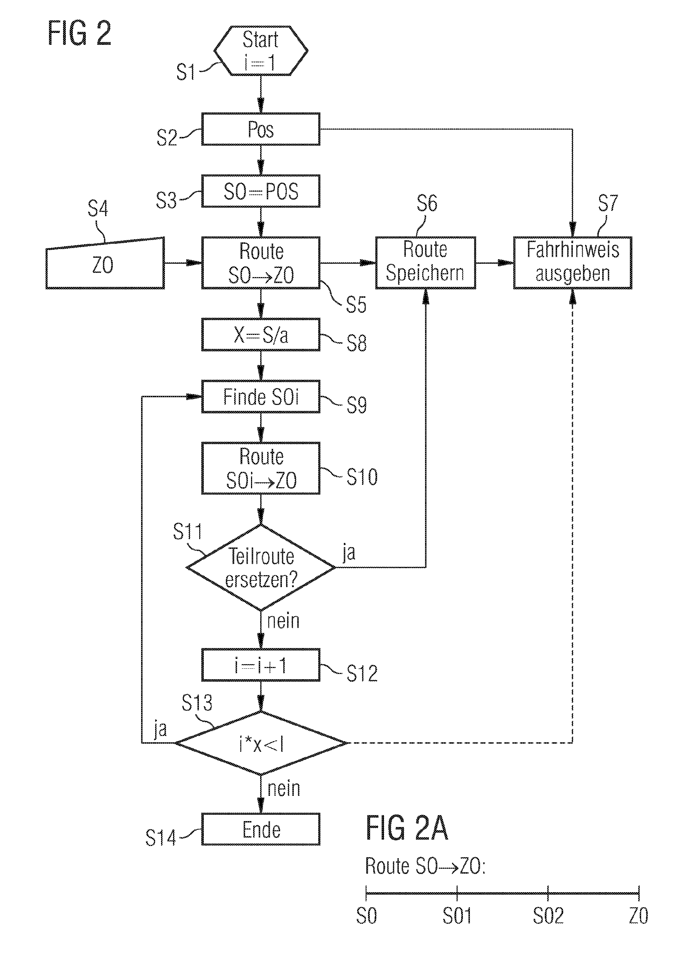

Figur 2 zeigt ein Ablaufdiagramm des erfindungsgemäßen Verfahrens. In Schritt S1 wird eine Initialisierung durchgeführt, wobei insbesondere ein Index i = 1 gesetzt wird. In Schritt S2 wird eine Bestimmung der aktuellen Fahrzeugposition vorgenommen. Diese aktuelle Fahrzeugposition wird in Schritt S3 als Startort angenommen. In Schritt S4 wird über den Benutzer der Zielort in das Navigationssystem eingegeben. Daraufhin wird in Schritt S5 eine Route zwischen dem Startort und dem Zielort berechnet. In Schritt S6 wird die Route abgespeichert und in Schritt S7 werden abhängig von der abgespeicherten Route und der Position des Fahrzeugs Fahrhinweise berechnet und ausgegeben. Die Ausgabe von Fahrhinweisen startet somit bereits in herkömmlicher Weise nach dem Berechnen der Route zwischen dem Startort und dem Zielort in Schritt S5. Anschließend wird eine Routenoptimierung durchgeführt. Hierzu wird in Schritt S8 zunächst eine Intervalllänge X bestimmt, wobei die Gesamtlänge der berechneten Route zwischen dem Startort und dem Zielort in gleich lange Intervalle geteilt wird. In Schritt S9 werden nun zu den jeweiligen Intervallgrenzen imaginäre Startorte bestimmt, wobei die imaginären Startorte Straßenverzweigungen sind, die in der Nähe der Intervallgrenzen liegen.

Figur 2a zeigt schematisch eine solche Route mit dem Startort SO, dem Zielort ZO und den imaginären Startorten SO1 und SO2.

Nun wird beginnend mit dem ersten imaginären Startort SO1, der am nächsten an dem Startort SO liegt, eine Routenberechnung zwischen dem imaginären Startort SO1 und dem Zielort in Schritt S10 durchgeführt. In Schritt S11 wird geprüft, ob die so erhaltene Route günstiger ist als die entsprechende Teilroute der ursprünglichen Route, die im Verfahrensschritt S5 berechnet wurde. Ist dies der Fall, so wird die entsprechende Teilroute der ursprünglichen Route in Schritt S6 ersetzt. Anschließend wird in Schritt S12 der Laufindex i für die Nummerierung der imaginären Standorte um 1 erhöht und in Schritt S13 geprüft, ob das Produkt aus Laufindex i und Intervalllänge noch kleiner ist als die Gesamtlänge 1 der ursprünglichen Route. Ist dies der Fall, das heißt, liegt der nächste imaginäre Startort noch zwischen dem Startort SO und dem Zielort ZO, so wird eine Routenoptimierung mit dem nächsten imaginären Startort S02 in Schritt S9 durchgeführt. Die Schleife beginnend mit Schritt S9 und endend mit Schritt S13 wird also so lange durchlaufen, wie imaginäre Startorte bei der vorgegebenen oder gewählten Intervalllänge X zwischen dem Startort SO und dem Zielort ZO vorhanden sind. Ist kein derartiger imaginärer Startort mehr vorhanden, so wird das Verfahren in Schritt S14 beendet. Die dann in dem Routenspeicher abgespeicherte Route kann sich aus mehreren optimierten Teilrouten zwischen imaginären Startorten und dem Zielort ZO zusammensetzen. Die Intervalllänge X wird insbesondere so gewählt, dass die Anzahl der Routenneuberechnungen mit der Rechenleistung des verwendeten Systems in angemessener Zeit bewältigt werden kann.

Bei dem oben beschriebenen Verfahren wird die Zielführung mit der ersten Route gestartet, so dass die Zeit bis zum ersten Fahrhinweis gegenüber herkömmlichen Systemen nicht verlängert wird. Die Routenoptimierung wird dann erst nach dem Start der Zielführung durchgeführt. Insbesondere kann die Routenoptimierung dabei in bestimmten Zeit- oder Entfernungsabschnitten mit einer Neuberechnung mit voraus verschobenen Startpunkten durchgeführt werden. Die Kriterien, nach denen eine vorhandene Teilroute durch eine optimierte Route ersetzt werden soll, können insbesondere voreingestellt werden. Beispielsweise kann ein Ersetzen einer Teilroute durch eine optimierte Route nur dann vorgenommen werden, wenn die Route sowohl bezüglich der Fahrzeit als auch der Entfernung um beispielsweise 10 % verkürzt wird. Ein anderes Beispiel wäre eine Verkürzung der Streckenlänge um 5 km und eine Verkürzung der Fahrzeit um 5 min. Weitere Beispiele sind eine Verkürzung der Streckenlänge um 5 km und eine Verlängerung der Fahrzeit um nicht mehr als drei Minuten oder eine Verkürzung der Fahrzeit um 5 Minuten bei einer Verlängerung der Strecke um nicht mehr als 5 km. Die Kriterien können jedoch beliebig voreingestellt werden.

In einer Variante wird die Routenoptimierung durchgeführt, bevor der erste Fahrhinweis ausgegeben wird. Diese Variante kann ebenfalls anhand der Fig. 2 erläutert werden. Die Durchführung der Verfahrensschritte S1 bis S6 kann dabei in der zuvor beschriebenen Weise durchgeführt werden. Anschließend an die Berechnung der ersten Route wird jedoch die Routenoptimierung mit den Verfahrensschritten S8 bis S13 durchgeführt und erst nach Optimierung der Route der erste Fahrhinweis in Schritt S7 ausgegeben.

In den Figuren 3 und 4 ist eine mögliche Optimierung der Fahrstrecke mit dem erfindungsgemäßen Verfahren anhand der von einem Navigationssystem ausgegebenen Landkartenanzeige dargestellt. Bei dem Abschnitt zwischen dem imaginären Startort SO1 und dem Zielort ZO ergibt eine Berechnung mit einem Algorithmus zur Berechnung einer kürzesten Route eine Route TR1, die gegenüber einer Route TR2, die mit einem Algorithmus zur Berechnung einer schnellsten Route berechnet wurde, eine Gesamtroute, deren Fahrzeit um fünf Minuten und deren Länge um 11 km kürzer ausfällt. Die optimierte Gesamtstrecke kann eine Mischung zwischen berechneten Teilrouten mit einem Algorithmus zur Berechnung einer kürzesten oder schnellsten Route sein.

Mit Hilfe einer wiederholten Routenberechnung mit vom ursprünglichen Startort SO aus verschobenen, imaginären Startorten SO1, SO2 kann eine Routenplanung optimiert werden, um eine kurze und dennoch schnelle Verbindung zwischen dem Startort SO und dem Zielort ZO zu finden. Hierbei kann insbesondere der eigentliche Grundalgorithmus der Routenplanung beibehalten werden. Die genannten Vorteile werden allein durch die erfindungsgemäße Aufsplittung und Berechnung von Teilrouten beginnend von imaginären Startorten aus erreicht.

## Patentansprüche

1. Verfahren zur Bestimmung einer Fahrtroute für ein Landfahrzeug zwischen einem Startort (SO) und einem Zielort (ZO) mit den Verfahrensschritten:
- Berechnen einer ersten Route zwischen dem Startort (SO) und dem Zielort (ZO) anhand von Landkartendaten,
- Bestimmen eines ersten imaginären Startortes (SO1), der ein Ort auf der berechneten ersten Route zwischen dem Startort (SO) und dem Zielort (ZO) ist,
- Berechnen einer Route zwischen dem imaginären Startort (SO) und dem Zielort (ZO),
- Vergleichen der berechneten Route zwischen dem imaginären Startort (SO) und dem Zielort (ZO) mit einer entsprechenden Teilroute der ersten Route hinsichtlich mindestens einer Routenkennzahl, insbesondere der Routenlänge oder der Fahrzeit,
- ggf. ersetzen der entsprechenden Teilroute der ersten Route durch die berechnete Route zwischen dem imaginären Startort (SO1) und dem Zielort (ZO).

2. Verfahren nach Anspruch 1, **dadurch gekennzeichnet , dass** mindestens ein weiterer imaginärer Startort (SO) bestimmt wird, der ein Ort zwischen dem ersten imaginären Startort (SO1) und dem Zielort (ZO) ist, und eine Route zwischen dem weiteren imaginären Startort (SO2) und dem Zielort (ZO) berechnet und mit einer entsprechenden Teilroute einer zuvor berechneten Route verglichen wird.

3. Verfahren nach einem der vorhergehenden Ansprüche,
**dadurch gekennzeichnet , dass** ausgehend vom Startort (SO) in etwa gleichen Abständen Orte auf der ersten Route als imaginäre Startorte ausgewählt werden.

4. Verfahren nach einem der vorhergehenden Ansprüche,
**dadurch gekennzeichnet , dass** als imaginäre Startorte (SO1, SO2) Straßenverzweigungen gewählt werden.

5. Verfahren nach einem der vorhergehenden Ansprüche,
**dadurch gekennzeichnet , dass** die Berechnung der Route zwischen mindestens einem der imaginären Startorte (SO1, SO2) und dem Zielort (ZO) mehrfach erfolgt, wobei verschiedene Berechnungsalgorithmen, insbesondere zur Berechnung einer kürzesten und einer schnellsten Route, zum Einsatz kommen.

6. Navigationssystem für Landfahrzeuge mit einem Positionsbestimmungsmodul (2) zur Bestimmung der aktuellen Fahrzeugposition, einer Eingabeeinrichtung (3) zur Eingabe eines Zielortes (ZO), einem Routenplaner (1) zur Bestimmung einer Fahrtroute anhand von Landkartendaten, einem Modul (5) zur Generierung von Fahrhinweisen unter Verwendung der Fahrtroute und einer Ausgabeeinrichtung (6) zur Ausgabe der Fahrhinweise, **dadurch gekennzeichnet , dass** der Routenplaner (1) zur Bestimmung einer Fahrtroute nach einem Verfahren gemäß einem der vorhergehenden Ansprüche ausgelegt ist.

7. Navigationssystem nach Anspruch 6, **dadurch gekennzeichnet , dass** unmittelbar nach Berechnung der ersten Route die Generierung und Ausgabe von Fahrhinweisen erfolgt.

8. Navigationssystem nach einem der vorhergehenden Ansprüche, **dadurch gekennzeichnet , dass** die Berechnung der Routen mit unterschiedlichen imaginären Startorten (SO1, SO2) zeitversetzt in festgelegten Zeitabständen erfolgt.

9. Navigationssystem nach einem der Ansprüche 6 oder 7, **dadurch gekennzeichnet , dass** die Berechnung einer der Routen mit imaginären Startorten (SO1, SO2) erfolgt, wenn das Fahrzeug einen vorgegebenen Mindestabstand zu diesem imaginären Startort (SO1, S02) unterschritten hat.

10. Navigationssystem nach Anspruch 9, **dadurch gekennzeichnet , dass** der Mindestabstand kleiner ist als der Abstand zwischen zwei imaginären Startorten (SO1, SO2).

11. Navigationssystem nach einem der vorhergehenden Ansprüche, **dadurch gekennzeichnet , dass** ein Modus zur Bestimmung einer optimalen Route auswählbar ist, wobei in dem Modus zur Bestimmung der optimalen Route die Berechnung der ersten Route zwischen dem Startort (SO) und dem Zielort (ZO) und die Berechnung der weiteren Routen zwischen den imaginären Startorten (SO1, SO2) und dem Zielort (ZO) abgeschlossen ist und eine optimale Route unter Verwendung von Teilrouten der ersten Route und mindestens einer der weiteren berechneten Routen zwischen einem der imaginären Startorte (SO1, S02) und dem Zielort (ZO) bestimmt wird, bevor Fahrhinweise generiert und ausgegeben werden.

12. Navigationssystem nach einem der vorhergehenden Ansprüche, **dadurch gekennzeichnet , dass** das Navigationssystem ein Modul zum Empfang und zur Verarbeitung von Verkehrsinformationen enthält und zur Berechnung einer Alternativroute im Falle von Verkehrsbehinderungen auf der geplanten Route ausgelegt ist.

13. Navigationssystem nach Anspruch 12, **dadurch gekennzeichnet , dass** die Berechnung der Alternativroute gemäß einem Verfahren nach einem der vorhergehenden Ansprüche erfolgt.
